# FASCICULE DE BREVET EUROPEEN

(11) **EP 2 075 888 B1**
(45) Date de publication et mention de la délivrance du brevet: **06.04.2011**
(21) Numéro de dépôt: 08291133.0
(22) Date de dépôt: 02.12.2008
(51) Int. Cl.: H02G 3/12

(54) **Support d'appareillages électriques multipostes à montage horizontal et vertical, ensemble comportant un tel support muni d'une entretoise, et appareillage électrique comportant un tel ensemble équipé de mécanismes d'appareillage**
Mehrplatzhalterung für elektrische Geräte zur horizontalen und vertikalen Montage, eine mit einer solchen Mehrplatzhalterung mit Querträger umfassende Baugruppe und ein elektrisches Gerät mit so einer Baugruppe
Support for multi-station electrical equipment with horizontal and vertical installation, assembly comprising such a support equipped with a spacer and electrical equipment comprising such an assembly equipped with equipment mechanisms

(30) Priorité: 26.12.2007 FR 0709104
(43) Date de publication de la demande: 01.07.2009
(73) Titulaire: Legrand France, 87000 Limoges (FR); Legrand SNC, 87000 Limoges (FR)
(72) Inventeur: Barruche, Alain, 87230 Bussière Galant (FR); Janicot, Laurent, 87110 Solignac (FR); Mourgaud, Jean-François, 87220 Feytiat (FR)
(74) Mandataire: Orsini, Fabienne

(56) Documents cités:
- WO-A-2006/117817
- DE-U1- 20 120 003
- US-B1- 6 648 280

## Description

La présente invention concerne de manière générale les supports d'appareillages électriques mis en oeuvre pour rapporter une pluralité de mécanismes d'appareillages, tel que par exemple des mécanismes d'interrupteur ou de prise de courant, dans une boîte à encastrer dans une paroi quelconque ou dans un boîtier à rapporter en saillie d'une telle paroi.

Elle concerne plus particulièrement un support d'appareillages électriques multipostes comprenant un cadre qui délimite intérieurement au moins une ouverture rectangulaire et qui comporte une face avant, une face arrière opposée, et, sur deux côtés opposés de chaque ouverture rectangulaire, deux logements ouverts l'un vers l'autre et destinés à recevoir des extrémités d'une entretoise rapportée transversalement dans ladite ouverture rectangulaire.

Elle concerne également un ensemble comprenant un support tel que précité et au moins une entretoise rapportée dans au moins une ouverture rectangulaire du support.

Elle concerne enfin un appareillage électrique comprenant un tel ensemble et au moins deux mécanismes d'appareillage rapportés dans ladite ouverture rectangulaire du support.

### ARRIÈRE-PLAN TECHNOLOGIQUE

Actuellement, on connaît du document WO 2006/117817, un support d'appareillages électriques du type précité, équipé d'une entretoise dont les extrémités sont engagées dans les logements du cadre du support d'appareillages.

Chaque logement est réalisé dans l'épaisseur du cadre et présente une ouverture qui s'étend en partie du côté intérieur de l'ouverture rectangulaire du cadre et en partie du côté avant du cadre.

Chaque logement est par ailleurs fermé par une face arrière tournée vers l'avant du cadre, par deux faces latérales tournées l'une vers l'autre, et par une face de fond tournée vers l'intérieur de l'ouverture rectangulaire du cadre. La face arrière du logement forme une butée arrière pour l'entretoise tandis que ses faces latérales et de fond forment des butées latérales et axiale pour cette entretoise.

Pour le maintien de l'entretoise dans chaque logement du cadre, le support comporte deux languettes qui s'étendent le long des faces de fond des logements, en direction de leurs faces arrière, et dont les faces tournées vers l'intérieur de l'ouverture rectangulaire portent des dents d'encliquetage.

Les extrémités de l'entretoise présentent des formes complémentaires des formes des logements et des faces tournées vers les faces de fond des logements, qui portent des nervures d'accrochage agencées pour coopérer avec les dents d'encliquetage des languettes prévues dans le fond desdits logements.

La configuration de ces logements impose d'engager l'entretoise dans les logements par l'avant du cadre, selon un unique mouvement de translation suivant une direction orthogonale au plan de l'ouverture rectangulaire du cadre. Lors de cet engagement, les languettes fléchissent progressivement, de manière élastique, vers les faces de fond des logements, jusqu'à ce que l'entretoise arrive en butée contre les faces arrière des logements. Dans cette position, les dents d'encliquetage des languettes des logements s'accrochent sur les nervures d'accrochage de l'entretoise, ce qui permet de maintenir cette dernière dans les logements.

On connaît par ailleurs du document EP 1 675 235, un support d'appareillage électrique qui comporte un cadre délimitant une ouverture rectangulaire bordée d'un bord tombant vers l'arrière du cadre. Ce support est équipé d'une entretoise à rapporter transversalement dans l'ouverture rectangulaire.

Les extrémités de l'entretoise sont équipées de dents d'encliquetage agencées pour s'accrocher sur la tranche libre du bord tombant longeant deux côtés opposés de l'ouverture rectangulaire du cadre.

Si ces supports assurent un maintien rigide de l'entretoise sur le cadre, ils ne sont en revanche pas conçus pour permettre un démontage aisé de l'entretoise.

En effet, pour libérer l'entretoise, un utilisateur est contraint de forcer le désencliquetage des deux extrémités de l'entretoise et de simultanément tirer l'entretoise selon une direction normale au plan de l'ouverture rectangulaire du cadre.

Pour tirer l'entretoise, il doit alors préalablement démonter les mécanismes d'appareillage accrochés à l'entretoise afin de pouvoir ensuite manipuler cette dernière. Pour forcer le désencliquetage des extrémités de l'entretoise, l'utilisateur doit en outre introduire les pointes de deux outils dans les espaces réduits situés entre le cadre et les extrémités de l'entretoise.

On comprend que ces opérations sont difficiles à réaliser. De plus, si elles ne sont pas réalisées avec soin, l'utilisateur risque de casser les moyens d'encliquetage de l'entretoise et donc de devoir mettre au rebut cette entretoise.

### OBJET DE L'INVENTION

Par rapport à l'état de la technique précité, le but de la présente invention est alors de faciliter non seulement le montage mais aussi le démontage d'une entretoise sur un support d'appareillage.

A cet effet, on propose selon l'invention un support tel que défini dans la revendication 1.

Ainsi, grâce à l'invention, l'entretoise rapportée dans les logements est maintenue en position dans le support par ces deux faces de butée, sans que celles-ci n'exercent d'effort sur l'entretoise. De ce fait, l'engagement de l'entretoise dans le support et son extraction peuvent être réalisés aisément sans effort.

L'extraction de l'entretoise est en particulier réalisée par un simple mouvement de coulissement de l'entretoise entre ces deux faces de butée, suivant une direction axiale contenue dans le plan de l'ouverture rectangulaire du cadre. Les mécanismes d'appareillage qui sont éventuellement accrochés à l'entretoise ne gênent donc en aucune manière ce mouvement de coulissement, si bien qu'il n'est pas nécessaire de les démonter du support avant d'extraire l'entretoise. Par conséquent, l'extraction rapide et aisée de l'entretoise permet en outre de démonter simultanément l'ensemble des mécanismes d'appareillage rapportés dans chaque ouverture rectangulaire du support.

D'autres caractéristiques avantageuses et non limitatives du support sont définies dans les revendications 2 à 11.

La grande largeur de l'ouverture d'engagement permet d'engager l'extrémité correspondante de l'entretoise dans son logement par l'avant du cadre (suivant une direction normale au plan de l'ouverture rectangulaire), avant de la faire coulisser axialement entre lesdites deux faces du logement. Lors de ce coulissement, une partie de cette extrémité de l'entretoise se glisse sous deux parties du cadre du support situées de part et d'autre de la petite largeur de l'ouverture d'engagement. De cette manière, les faces arrière de ces deux parties du cadre forment la butée de retenue avant de l'entretoise.

On propose également selon l'invention un ensemble tel que défini par les revendications 12 à 14 et un appareillage électrique tel que défini par la revendication 15.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective éclatée d'un ensemble selon l'invention, comprenant un support d'appareillages électriques multipostes et deux entretoises, rapporté sur une boîte d'encastrement ;
- la figure 2 est une vue en perspective assemblée de l'ensemble de la figure 1 ;
- la figure 3 est une vue de détail de la zone III de la figure 1 ;
- la figure 4 est une vue en perspective d'une des entretoises de la figure 1 ;

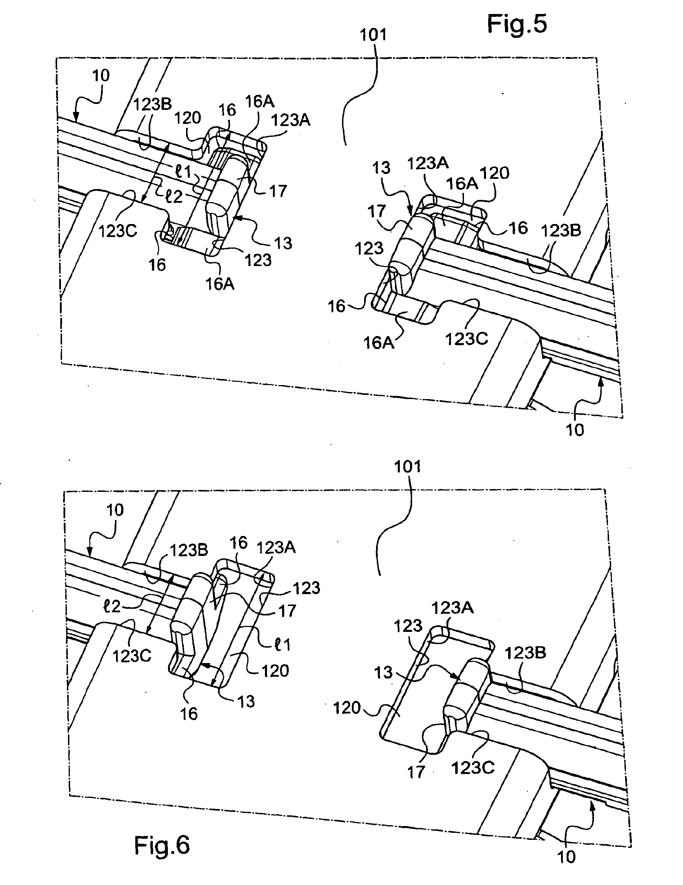

- les figures 5 et 6 sont des vues de détail de la zone V de la figure 2, respectivement dans une position d'engagement et dans une position engagée des entretoises ;
- la figure 7 est une vue en coupe partielle du support d'appareillages électriques multipostes représenté sur la figure 2 ; et
- la figure 8 est une vue en perspective du support d'appareillages électriques multipostes de la figure 1.

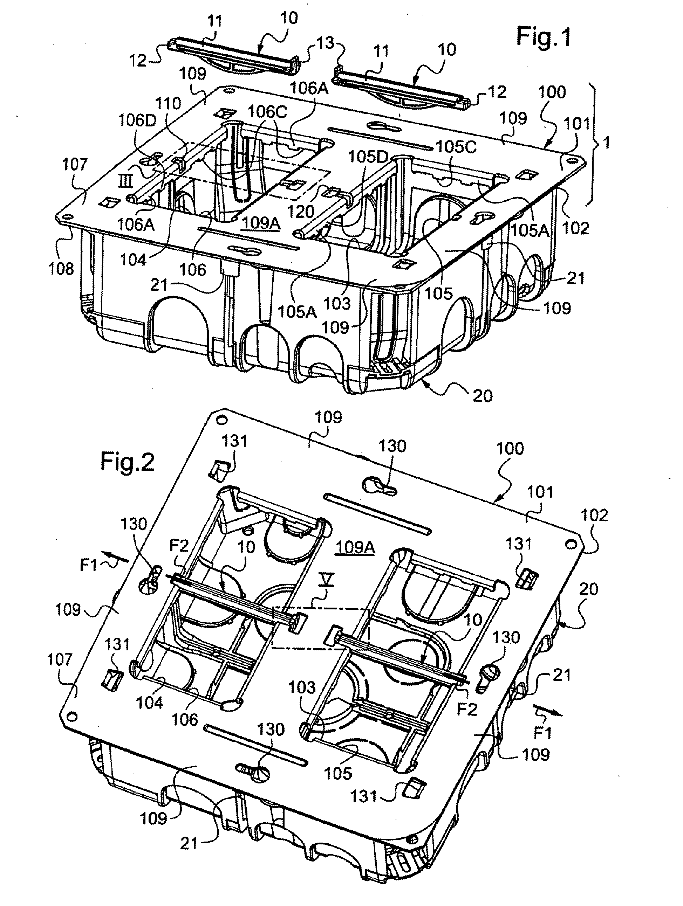

Sur les figures 1 et 2, on a représenté un support 100 d'appareillages électriques rapporté sur l'avant d'une boîte 20 qui est ici du type à encastrer dans une paroi quelconque. En variante, cette boîte pourrait être du type à rapporter en saillie sur une telle paroi.

Le support 100 sert à supporter une pluralité de socles de mécanismes d'appareillage (non représentés) à disposer à l'intérieur de la boîte 20.

Ces mécanismes d'appareillage peuvent indifféremment présenter des fonctions d'interrupteur, de prise de courant, de prise de téléphone, de disjoncteur ou de prise réseau.

Le support 100 est destiné à être recouvert d'une plaque de façade enjoliveur (non représentée) qui, une fois installée sur le support 100, cache la totalité de ce support.

Généralement, lorsqu'il s'agit d'un appareillage électrique encastré, le support 100 prend appui sur la face avant de la paroi d'encastrement et la plaque de façade enjoliveur s'étend au-delà du support pour prendre elle-même également appui sur la face avant de la paroi d'encastrement.

En revanche, lorsqu'il s'agit d'un appareillage électrique en saillie, le support repose sur une partie intérieure de la boîte en saillie et la plaque de façade enjoliveur ferme l'ouverture avant de cette boîte en recouvrant le support.

Tel que représenté sur les figures 1, 2 et 8, le support 100 comprend un cadre 101 essentiellement plat présentant une face avant 107 destinée à être recouverte par la plaque de façade enjoliveur et une face arrière 108 opposée qui ferme partiellement l'ouverture avant de la boîte 20. Ce cadre 101 est défini entre un bord périphérique extérieur 102, ici carré, et deux bords périphériques intérieurs 103, 104 rectangulaires qui délimitent deux ouvertures rectangulaires 105, 106 parallèles.

Le cadre 101 comporte donc quatre branches périphériques 109 et une branche transversale 109A qui sépare les deux ouvertures rectangulaires 105, 106.

On considérera dans la suite de cet exposé que le support 100 est disposé verticalement sur la paroi verticale lorsque sa branche transversale 109A s'étend longitudinalement selon un axe vertical et qu'il est disposé horizontalement sur cette paroi verticale lorsque sa branche transversale 109A s'étend longitudinalement selon un axe horizontal.

Le cadre 101 du support 100 est ici réalisé d'une seule pièce par découpage et pliage d'un feuillard métallique, pour présenter une faible épaisseur.

Avantageusement, le cadre métallique peut être surmoulé d'une peau en matière synthétique isolante. Dans ce cas, la peau (non représentée sur les figures) recouvre au moins la majeure partie de la face avant 107 du cadre 101. Préférentiellement, la peau peut recouvrir également la majeure partie de la face arrière 108 du cadre 101, ainsi que la tranche de ce cadre.

Le cadre 101 en matière métallique confère une grande rigidité au support 100 tandis que la peau en matière isolante confère à l'utilisateur un sentiment de sécurité électrique en formant une isolation électrique. L'association du cadre 101 plat métallique et de la peau surmoulée sur ce cadre permet ainsi d'obtenir un support 100 esthétique de faible épaisseur et de grande résistance mécanique.

Selon un mode de réalisation préférentiel du support 100, la matière isolante constituant la peau est une matière plastique telle qu'un polymère chargé en fibres de verre ou un ABS (Acrylonitrile Butadiène Styrène).

En variante, on peut prévoir que le cadre 101 du support 100 soit réalisé d'une seule pièce par moulage d'une matière synthétique.

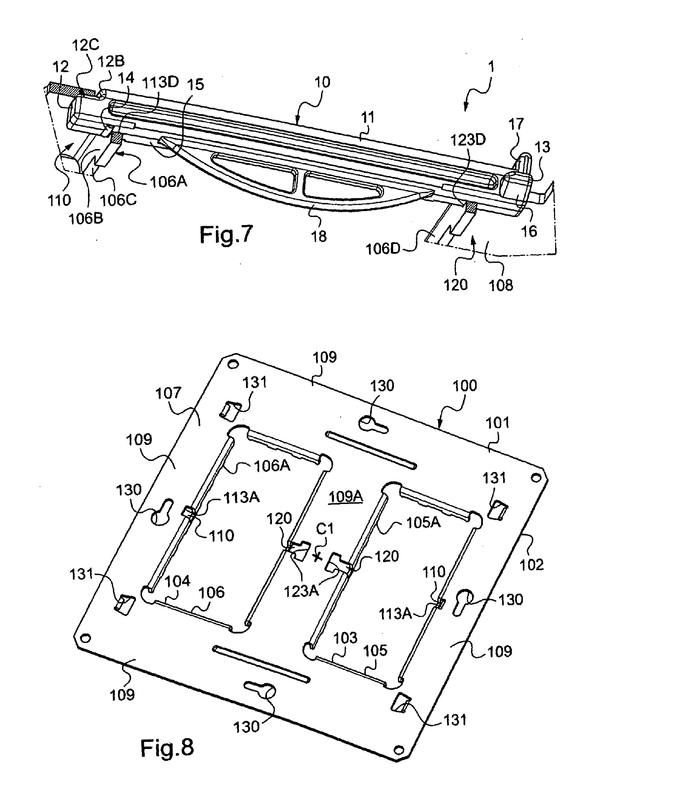

Comme le montrent plus particulièrement les figures 2 et 8, le cadre 101 comporte dans chacune de ses quatre branches périphériques 109 des moyens d'assujettissement propres à permettre sa fixation à la boîte 20.

Ces moyens d'assujettissement comprennent ici des perçages 130, en forme de trous de serrure, qui s'étendent globalement circulairement, en étant centrés sur le centre C1 du cadre 101. Chaque perçage 130 permet le passage du corps fileté d'une vis de fixation destinée à être vissée dans un logement 21 prévu à cet effet dans la boîte 20.

Lorsque le cadre 101 est recouvert d'une peau isolante, celle-ci forme une surépaisseur autour de chaque perçage 130, de sorte qu'à cet endroit, le cadre 101 métallique reste localement apparent.

Par ailleurs, il est prévu aux quatre coins du cadre 101, de part et d'autre de chaque perçage 130, des moyens d'assemblage propres à permettre le montage de la plaque de façade enjoliveur sur le support 100.

Ces moyens d'assemblage comprennent des ouvertures 131 pourvues de rebords d'accrochage de dents d'encliquetage prévues sur la face arrière de la plaque de façade enjoliveur.

Bien sûr, en variante, ces moyens d'assemblage pourront être différents. Ils pourront par exemple être formés par de simples perçages prévus dans le support, permettant le passage de vis de fixation dont les corps filetés seront destinés à être vissés dans des taraudages correspondants de la boîte et dont les têtes seront destinées à prendre appui contre la plaque de façade enjoliveur.

En outre, chaque ouverture rectangulaire 105, 106 est bordée de quatre bords tombants 105A, 106A qui s'étendent le long de ses quatre côtés et qui font saillie vers l'arrière du cadre 101.

Chaque bord tombant 105A, 106A présente une tranche libre 105C, 106C (voir figure 7) crénelée, une face intérieure 105D, 106D tournée vers l'intérieur de l'ouverture rectangulaire 105, 106 correspondante (voir figure 1) et une face extérieure 106B tournée à l'opposé (voir figure 7).

Le cadre 101 comporte par ailleurs, sur deux côtés opposés de chaque ouverture rectangulaire 105, 106, deux logements 110, 120 ouverts l'un vers l'autre et destinés à recevoir les extrémités 12, 13 d'une entretoise 10. Ces deux logements 110, 120 sont ici situés à mi-longueur des grands côtés des ouvertures rectangulaires 105, 106.

Comme le montre la figure 7 et selon une caractéristique particulièrement avantageuse de l'invention, chaque logement 110, 120 s'étend sous la face arrière 108 du cadre 101 et comporte deux faces de butée 108, 113D et 108, 123D tournées l'une vers l'autre, sensiblement parallèles à la face arrière 108 du cadre 101.

L'une de ces deux faces de butée 113D, 123D forme une butée d'appui arrière de l'entretoise 10 tandis que l'autre de ces deux faces de butée 108 forme une butée de retenue avant de l'entretoise 10.

Les logements 110, 120 s'étendent ici plus particulièrement en retrait de la face intérieure 105D, 106D du bord tombant 105A, 106A, sous la face arrière 108 du cadre 101.

Préférentiellement, l'un au moins des logements 110, 120 débouche sur la face avant 107 du cadre 101.

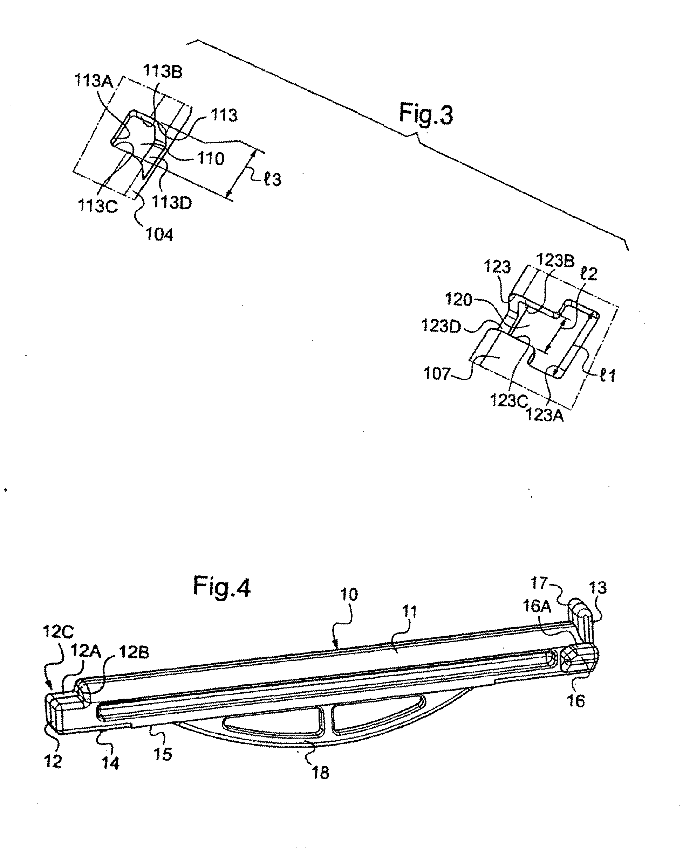

Tels que représentés sur les figures 3 et 7, chacun des deux logements 110, 120 est ouvert sur la face avant 107 du cadre 101 et sur l'intérieur de l'ouverture rectangulaire 106 afin de permettre l'engagement des extrémités 12, 13 de l'entretoise 10 dans ces logements 110, 120.

Les ouvertures des logements 110, 120 sont des ouvertures traversantes qui traversent l'épaisseur du cadre 101 (voir figure 1) et qui se prolongent dans l'épaisseur des bords tombants 105A,106A longeant l'ouverture rectangulaire 105, 106 correspondante.

Les ouvertures des deux logements 110, 120 présentent ici des contours différents.

L'une de ces ouvertures, appelée ouverture d'insertion 113 présente une largeur l3 constante tandis que l'autre de ces ouvertures, appelée ouverture d'engagement 123, présente une largeur non constante, avec en particulier une petite largeur l2 et une grande largeur l1.

Plus précisément, comme le montrent les figures 3 et 8, l'ouverture d'insertion 113 de chaque logement 110 comporte un premier bord transversal 113A qui s'étend entre la face arrière 108 et la face avant 107 du cadre 101, parallèlement et à distance du bord périphérique intérieur 103, 104 de chaque ouverture rectangulaire 105, 106.

Ce premier bord transversal 113A forme une butée axiale pour une première extrémité 12 de l'entretoise 10 engagée dans le logement 110, au travers de l'ouverture d'insertion 113.

Comme le montre la figure 3, l'ouverture d'insertion 113 comporte en outre un second bord transversal 113D qui s'étend dans l'épaisseur du bord tombant 106A, parallèlement et à distance de la face avant 107 du cadre 101.

Ce second bord transversal 113D s'étend en regard de la face arrière 108 du cadre 101, de sorte qu'il forme l'une desdites faces de butée du logement 110 tandis que la face arrière 108 du cadre 101 forme l'autre desdites faces de butée de ce logement 110. En particulier, le second bord transversal 113D forme ladite butée d'appui arrière de la première extrémité 12 de l'entretoise 10 tandis que la face arrière 108 du cadre 101 forme la butée de retenue avant de cette extrémité 12 de l'entretoise 10.

L'ouverture d'insertion 113 comporte enfin deux bords latéraux 113B, 113C qui joignent ces premier et second bords transversaux 113A, 113D. Les deux bords latéraux 113B, 113C s'étendent dans deux plans parallèles distants l'un de l'autre de la largeur l3 constante. Ils forment des butées latérales pour la première extrémité 12 de l'entretoise 10 engagée dans le logement 110.

Comme le montre la figure 3, l'ouverture d'engagement 123 de chaque logement 120 comporte elle aussi un bord transversal 123D qui s'étend dans l'épaisseur du bord tombant 106A correspondant, parallèlement et à distance de la face avant 107 du cadre 101.

Ce bord transversal 123D s'étend en regard de la face arrière 108 du cadre 101, de sorte qu'il forme l'une desdites faces de butée du logement 120 tandis que la face arrière 108 du cadre 101 forme l'autre desdites faces de butée de ce logement 120. En particulier, le bord transversal 123D forme ladite butée d'appui arrière de la seconde extrémité 13 de l'entretoise 10 tandis que la face arrière 108 du cadre 101 forme la butée de retenue avant de cette extrémité 13 de l'entretoise 10.

L'ouverture d'engagement 123 du logement 120 comporte également un autre bord transversal 123A qui s'étend entre la face arrière 108 et la face avant 107 du cadre 101, parallèlement et à distance du bord périphérique intérieur 103, 104 de chaque ouverture rectangulaire 105, 106 (voir figures 3 et 8).

L'ouverture d'engagement 123 comporte enfin deux bords latéraux 123B, 123C qui joignent ces deux bords transversaux 123A, 123D. Ces deux bords latéraux 123B, 123C s'étendent dans deux plans parallèles distants l'un de l'autre d'une petite largeur l2 égale à la largeur l3 séparant les deux bords latéraux 113B, 113C de l'ouverture d'insertion 113 engagée dans le logement 120. Ces deux bords latéraux 123B, 123C forment des butées latérales pour la seconde extrémité 13 de l'entretoise 10.

En outre, l'ouverture d'engagement 123 de chaque logement 120 présente un agrandissement de largeur l1 qui lui confère sur la face avant 108 du cadre 101 une forme de T dont la tête est tournée à l'opposé de l'ouverture rectangulaire 105, 106 correspondante. Pour former la tête de ce T, les deux bords latéraux 123B, 123C de l'ouverture d'engagement 123 passent d'un écartement l2 à un écartement l1 strictement supérieur à l2 avant de rejoindre le bord transversal 123A (voir figure 3).

Bien entendu, en variante, cet agrandissement de largeur l1 de l'ouverture d'engagement 123 pourrait conférer à celle-ci une forme différente, telle que par exemple une forme de trou de serrure.

Le support 100 représenté sur la figure 2 est équipé de deux entretoises 10 identiques qui forment avec ce support 100 un ensemble 1 rigide.

Ces deux entretoises 10 sont rapportées transversalement dans les ouvertures rectangulaires 105, 106, à mi-longueur de celles-ci, de telle sorte que leurs extrémités 12, 13 sont engagées dans les logements 110, 120 correspondants du support 100 (voir figure 7).

Comme le montrent les figures 4 et 7, chaque entretoise 10 présente un corps allongé 11 de section globalement carrée, présentant une largeur égale, au jeu près, aux largeurs l2 et l3 séparant les bords latéraux 113B, 113C et 123B, 123C des ouvertures d'engagement 123 et d'insertion 113.

De cette manière, les deux extrémités 12, 13 libres de l'entretoise 10 engagées dans les deux logements 110, 120 de l'ouverture rectangulaire 106 sont maintenues latéralement par ces bords latéraux.

Pour accroître sa rigidité, chaque entretoise 10 comporte une nervure 18 en forme d'arche qui s'étend le long de sa face arrière 15, depuis l'une jusqu'à l'autre de ses extrémités 12, 13. Chaque entretoise 10 est réalisée d'une seule pièce par moulage d'une matière synthétique.

La première extrémité 12 de chaque entretoise 10 présente en particulier un décrochement 12B en face avant qui forme une encoche 12C. Cette encoche 12C présente ainsi une face avant 12A et une face de butée axiale 12B qui s'élève perpendiculairement à sa face avant 12A.

La face arrière 15 de la première extrémité 12 de chaque entretoise 10 repose sur le second bord transversal 113D de l'ouverture d'insertion 113 du logement 110 tandis que la face avant 12A de son encoche 12C est située en regard de la face arrière 108 du cadre 10, à proximité ou au contact de celle-ci.

La face de butée axiale 12B de l'encoche 12C de chaque entretoise 10 est quant à elle en appui contre le premier bord transversal 113A de l'ouverture d'insertion 113 du logement 110 correspondant. De cette manière, l'extrémité 12 de chaque entretoise 10 est bloquée axialement dans le logement 110 suivant une première direction F1 (voir figure 2).

Comme le montre plus particulièrement la figure 7, chaque entretoise 10 comporte par ailleurs sur sa face arrière 15, à proximité de sa première extrémité 12, une nervure en saillie 14 qui s'étend transversalement à l'axe longitudinal de l'entretoise 10. Cette nervure en saillie 14 est en appui contre la face extérieure 106B du bord tombant 106A, qui forme une face dite d'accrochage du logement 110. De cette manière, l'extrémité 12 de chaque entretoise 10 est bloquée axialement dans ledit logement 110 suivant une seconde direction F2 opposée à ladite première direction F1 (voir figure 2).

Cette nervure en saillie 14 présente une hauteur faible, de manière qu'un effort axial modéré exercé manuellement sur l'entretoise 10 permet de décrocher cette nervure en saillie 14 de la face d'accrochage 106A pour faire coulisser l'entretoise 10 suivant cette seconde direction F2.

Chaque entretoise 10 comporte par ailleurs, du côté de sa seconde extrémité 13, deux ailes latérales 16 qui lui confèrent une forme complémentaire de la forme en T de l'ouverture d'engagement 123 du logement 120 correspondant. Chaque aile latérale 16 présentant une face avant 16A plane,(voir les figures 4 et 7).

La face arrière 15 de la seconde extrémité 13 de chaque entretoise 10 repose sur le bord transversal 123D de l'ouverture d'engagement 123 du logement 120 correspondant tandis que les faces avant 16A de ses ailes latérales 16 sont situées en regard de la face arrière 108 du cadre 10, à proximité ou au contact de celle-ci.

Chaque entretoise 10 comporte de plus, du côté de sa seconde extrémité 13, une languette de manoeuvre 17 qui s'élève perpendiculairement à sa face avant. Cette languette de manoeuvre 17 présente une largeur égale à la distance séparant les deux bords latéraux 123B, 123C de l'ouverture d'engagement 123 du logement 120. Elle passe au travers de cette ouverture d'engagement 123 pour faire saillie de la face avant 107 du cadre 101 afin d'être accessible à l'installateur.

Pour monter chaque entretoise 10 au travers d'une ouverture rectangulaire 105, 106 du cadre 101 du support 100, l'installateur engage frontalement et simultanément la première extrémité 12. de l'entretoise 10 dans le logement 110 au travers de son ouverture d'insertion 113 et la seconde extrémité 13 de l'entretoise 10 dans le logement 120 au travers de son ouverture d'engagement 123.

A ce stade, la face arrière 15 de l'entretoise 10 repose sur les bords transversaux 113D, 123D desdites ouvertures d'insertion 113 et d'engagement 123.

Puis, en translatant l'entretoise 10 dans le plan de l'ouverture rectangulaire 105, 106 correspondante, l'installateur fait respectivement coulisser axialement la première extrémité 12 et les ailes latérales 16 de la seconde extrémité 13 de l'entretoise 10 dans les logements 110, 120, sous la face arrière 108 du cadre 101. Ce mouvement de coulissement s'achève lorsque la face de butée axiale 12B de l'encoche 12C de la première extrémité 12 de l'entretoise 10 vient en appui contre le premier bord transversal 113A de l'ouverture d'insertion 113 du logement 110. Dans cette position, la nervure en saillie 14 de l'entretoise 10 s'accroche à la face d'accrochage 106B du logement 110, ce qui empêche tout mouvement axial de l'entretoise 10.

En résumé, le mouvement de montage de l'entretoise 10 sur le support 100 est décomposable en deux mouvements de translation, dont un mouvement d'engagement de l'entretoise 10 dans les logements 110, 120 suivant une direction orthogonale au plan de l'ouverture rectangulaire 105, 106 correspondante du cadre 101, et un mouvement de coulissement de l'entretoise 10 au travers des ouvertures 113, 123 des logements 110, 120 suivant une direction F1 parallèle au plan de cette ouverture rectangulaire 105, 106 (voir figure 2).

Pour extraire chaque entretoise 10 des logements 110, 120 du cadre 101, l'installateur s'aide de la languette de manoeuvre 17 afin de faire coulisser l'entretoise 10 en sens inverse, en désencliquetant la nervure en saillie 14 de la face d'accrochage 106B du logement 110 (voir figure 7). Lorsque les ailes latérales 16 de la seconde extrémité 13 de l'entretoise 10 arrivent en regard de la tête du T de l'ouverture d'engagement 123 du logement 120, l'installateur exerce sur cette languette un effort normal au plan de l'ouverture rectangulaire 106, ce qui lui permet de désengager l'entretoise 10 desdits logements 110, 120 du cadre 101.

En résumé, le mouvement d'extraction de l'entretoise 10 par rapport au support 100 est également décomposable en deux mouvements de translation, dont un mouvement de coulissement de l'entretoise 10 au travers des ouvertures 113, 123 des logements 110, 120 suivant une direction F2 parallèle au plan de l'ouverture rectangulaire 105, 106 correspondante et un mouvement d'extraction de l'entretoise 10 en dehors des logements 110, 120 suivant un axe orthogonal au plan de cette ouverture rectangulaire 105, 106 (voir figure 2).

Pour le montage des socles de mécanismes d'appareillage sur le support 100, les tranches libres 105C, 106C (figure 7) crénelées des bords tombants 105A, 106A de chaque ouverture rectangulaire 105, 106 sont conçues pour que les dents d'encliquetage des socles de mécanismes d'appareillage puissent s'accrocher à elles, en étant maintenus latéralement par les créneaux.

Ici, chaque ouverture rectangulaire 105, 106 du cadre 101 présente une largeur correspondant à la moitié de sa longueur, de manière à pouvoir accueillir une pluralité de socles de mécanismes d'appareillage.

En l'occurrence, chaque ouverture rectangulaire 105, 106 peut accueillir deux socles cubiques (à deux modules) dont les façades carrées remplissent la surface de l'ouverture rectangulaire correspondante, ou quatre socles parallélépipédiques (à un module) dont les façades rectangulaires remplissent la surface de cette ouverture rectangulaire, ou encore un socle cubique et deux socles parallélépipédiques.

Plus particulièrement, lorsque le support 100 est monté horizontalement sur une paroi quelconque de réception, les socles de mécanismes d'appareillage viennent s'accrocher par leurs deux dents d'encliquetage (prévues sur deux faces opposées) sur deux des bords tombants 105A, 106A opposés longeant l'ouverture rectangulaire 105, 106 correspondante du cadre 101.

Avantageusement, lorsque le support 100 est monté horizontalement sur la paroi de réception, les mouvements de montage et d'extraction de chaque entretoise 10, décomposables en deux mouvements de translation, ne nécessitent pas le décrochage préalable des socles de mécanismes d'appareillage des bords tombants 105A, 106A du support 100. L'entretoise 10 est alors disposée entre les socles, pour diviser l'ouverture rectangulaire 105, 106 correspondante en deux ouvertures carrées.

En revanche, lorsque le support 100 est monté verticalement sur la paroi de réception, les socles de mécanismes d'appareillage ne peuvent venir s'accrocher par leurs dents d'encliquetage que sur un des bords tombants 105A, 106A longeant l'ouverture rectangulaire 105, 106 correspondante du cadre 101 (dans cette position verticale du support, la hauteur de chaque ouverture rectangulaire est deux fois plus grande que sa largeur).

Avantageusement, comme le montre la figure 7, chaque entretoise 10 est alors équipée de moyens de montage de socles de mécanismes d'appareillage. Plus particulièrement, chaque entretoise 10 comporte en face arrière 15 une tranche libre, ici formée par sa face arrière 15 elle-même, qui s'étend à la même hauteur que la tranche libre 106C des bords tombants 106A de l'ouverture rectangulaire 106 correspondante du cadre 101. Chaque entretoise 10 montée sur le support 100 subdivisant l'ouverture rectangulaire 105, 106 correspondante du cadre 101 en deux ouvertures carrées, chaque socle de mécanisme d'appareillage rapporté dans une de ces ouvertures carrées peut s'accrocher à la face arrière 15 de l'entretoise 10 et à la tranche libre 106C crénelée du bord tombant 106A opposé à l'entretoise 110.

Le mouvement d'extraction de chaque entretoise 10, qui comporte en particulier un mouvement de coulissement dans le plan de l'ouverture rectangulaire 105, 106, permet alors d'extraire l'entretoise 10 des logements 110, 120 du cadre 101 sans qu'il soit nécessaire de procéder au préalable au démontage des socles de mécanismes d'appareillage. Par conséquent, cette extraction permet de simultanément démonter l'entretoise 10 mais aussi tous les socles de mécanismes d'appareillage qui y sont accrochés.

## Revendications

1. Support (100) d'appareillages électriques multipostes comprenant un cadre (101) qui délimite intérieurement au moins une ouverture rectangulaire (105, 106) et qui comporte une face avant (107), une face arrière (108) opposée, et, sur deux côtés opposés de chaque ouverture rectangulaire (105, 106), deux logements (110, 120) ouverts l'un vers l'autre et destinés à recevoir des extrémités (12, 13) d'une entretoise (10) rapportée transversalement dans ladite ouverture rectangulaire (105, 106), chaque logement (110, 120) s'étendant sous la face arrière (108) du cadre (101) et comportant deux faces de butée (108, 113D, 123D), dont une face de retenue avant de l'entretoise (10) formée par la face arrière (108) du cadre (101), et une face de retenue arrière (113D, 123D) de l'entretoise (10) tournée vers ladite face de retenue avant, sensiblement parallèlement à celle-ci.

2. Support (100) d'appareillages électriques selon la revendication précédente, dans lequel l'un au moins des logements (120) de chaque ouverture rectangulaire (105, 106) débouche sur la face avant (107) du cadre (101) par une ouverture d'engagement (123).

3. Support (100) d'appareillages électriques selon la revendication précédente, dans lequel ladite ouverture d'engagement (123) présente une grande largeur (11) et une petite largeur (12).

4. Support (100) d'appareillages électriques selon la revendication précédente, dans lequel ladite ouverture d'engagement (123) présente une forme en T ou en trou de serrure.

5. Support (100) d'appareillages électriques selon l'une des revendications 2 à 4, dans lequel l'autre des logements (110) débouche sur la face avant (107) du cadre (101) par une ouverture d'insertion (113) de largeur (13) constante.

6. Support (100) d'appareillages électriques selon la revendication précédente, dans lequel, sur la face avant (107) du cadre (101), ladite ouverture d'insertion (113) est délimitée par trois bords (113A, 113B, 113C), dont deux bords latéraux (113B, 113C) parallèles et un bord transversal (113A) situé à distance du côté correspondant de l'ouverture rectangulaire (105, 106), qui forme une butée axiale pour l'entretoise (10).

7. Support (100) d'appareillages électriques selon l'une des revendications précédentes, dans lequel le cadre (101) est formé par une plaque percée, sur lesdits deux côtés opposés de chaque ouverture rectangulaire (105, 106), de deux fenêtres traversantes (113, 123) formant des ouvertures d'engagement et d'insertion des extrémités (12, 13) de ladite entretoise (10) dans les logements (110, 120).

8. Support (100) d'appareillages électriques selon la revendication précédente, dans lequel l'une desdites faces de butée de chaque logement (110, 120) est formée par la face arrière (108) du cadre (101).

9. Support (100) d'appareillages électriques selon l'une des deux revendications précédentes, dans lequel lesdits côtés opposés de chaque ouverture rectangulaire (105, 106) sont bordés d'un bord tombant (105A, 106A) faisant saillie vers l'arrière du cadre (101).

10. Support (100) d'appareillages électriques selon la revendication précédente, dans lequel lesdites ouvertures d'engagement et d'insertion (113, 123) s'étendent également dans ledit bord tombant (105A, 106A).

11. Support (100) d'appareillages électriques selon la revendication précédente, dans lequel lesdites ouvertures d'engagement et d'insertion (113, 123) sont délimitées dans ledit bord tombant (105A, 106A) par trois bords (113B, 113C, 113D, 123B, 123C, 123D), dont deux bords latéraux (113B, 113C, 123B, 123C) parallèles formant des butées latérales pour les deux extrémités (12, 13) de ladite entretoise (10) et un bord transversal (113D, 123D), situé à distance de la face arrière (108) du cadre (101), qui forme l'une desdites faces de butée (108, 113D, 123D) du logement (110, 120) correspondant.

12. Ensemble (1) **caractérisé en ce qu'**il comporte un support (100) d'appareillages électriques selon l'une des revendications précédentes et au moins une entretoise (10) dont chaque extrémité (12, 13) est engagée dans un desdits logements (110, 120) du cadre (101), de telle sorte qu'une face arrière (15) de l'entretoise (10) repose sur l'une desdites faces de butée (113D, 123D) de chaque logement (110, 120).

13. Ensemble (1) selon la revendication précédente comprenant un support (100) selon la revendication 3, dans lequel l'une des deux extrémités (13) de l'entretoise (10) comporte au moins une aile latérale (16) qui lui confère une largeur égale, au jeu près, à la grande largeur (11) de ladite ouverture d'engagement (123), ladite aile latérale (16) présentant une face avant (16A) située en regard de l'autre desdites faces de butée (108) du logement (110, 120) correspondant.

14. Ensemble (1) selon l'une des revendications 12 et 13 comprenant un support (100) selon la revendication 9, dans lequel ledit bord tombant (105A, 106A) présente une face extérieure (106B) tournée à l'opposé de ladite ouverture rectangulaire (105, 106), formant une face de chaque logement (110, 120), dite face d'accrochage, et dans lequel l'une des extrémités (12) de ladite entretoise (10) comporte en saillie de sa face arrière (15) une nervure (14) accrochée à la face d'accrochage (106B).

15. Appareillage électrique comprenant un ensemble (1) selon l'une des revendications 12 à 14 et au moins deux mécanismes d'appareillage rapportés dans chaque ouverture rectangulaire (105, 106) subdivisée du support (100).

## Claims

1. A support (100) for multi-unit electrical equipment, the support comprising a frame (101) defining internally at least one rectangular opening (105, 106) and having a front face (107), an opposite rear face (108), and, on two opposite sides of each rectangular opening (105, 106), two housings (110, 120) that are open towards each other and that are designed to receive ends (12, 13) of a spacer (10) fitted transversely in said rectangular opening (105, 106), each housing (110, 120) extending under the rear face (108) of the frame (101) and including two abutment faces (108, 113D, 123D), including a front retaining face for retaining the spacer (10) and formed by the rear face (108) of the frame (101), and a rear retaining face (113D, 123D) for retaining the spacer (10) and turned towards said front retaining space, and substantially parallel therewith.

2. An electrical equipment support (100) according to the preceding claim, wherein at least one of the housings (120) of each rectangular opening (105, 106) opens out to the front face (107) of the frame (101) via an engagement opening (123).

3. An electrical equipment support (100) according to the preceding claim, wherein said engagement opening (123) presents a large width (ℓ1) and a small width (ℓ2).

4. An electrical equipment support (100) according to the preceding claim, wherein said engagement opening (123) presents a T-shape or a keyhole-shape.

5. An electrical equipment support (100) according to any one of claims 2 to 4, wherein the other one of the housings (110) opens out to the front face (107) of the frame (101) via an insertion opening (113) of constant width (ℓ3).

6. An electrical equipment support (100) according to the preceding claim, wherein said insertion opening (113) in the front face (107) of the frame (101) is defined by three edges (113A, 113B, 113C), comprising two parallel side edges (113B, 113C), and a transverse edge (113A) situated at a distance from the corresponding side of the rectangular opening (105, 106) and forming an axial abutment for the spacer (10).

7. An electrical equipment support (100) according to any preceding claim, wherein the frame (101) is formed by a plate that is pierced by two through windows (113, 123) in said two opposite sides of each rectangular opening (105, 106), the through windows (113, 123) forming engagement and insertion openings for leading the ends (12, 13) of said spacer (10) into the housings (110, 120).

8. An electrical equipment support (100) according to the preceding claim, wherein one of said abutment faces of each housing (110, 120) is formed by the rear face (108) of the frame (101).

9. An electrical equipment support (100) according to either one of the two preceding claims, wherein said opposite sides of each rectangular opening (105, 106) are bordered by respective drop edges (105A, 106A) projecting towards the rear of the frame (101).

10. An electrical equipment support (100) according to the preceding claim, wherein said engagement and insertion openings (113, 123) also extend in said drop edges (105A, 106A).

11. An electrical equipment support (100) according to the preceding claim, wherein said engagement and insertion openings (113, 123) are defined in said drop edges (105A, 106A) by three edges (113B, 113C, 113D, 123B, 123C, 123D), comprising two parallel side edges (113B, 113C, 123B, 123C) forming lateral abutments for the two ends (12, 13) of said spacer (10), and a transverse edge (113D, 123D) situated at a distance from the rear face (108) of the frame (101) and forming one of said abutment faces (108, 113D, 123D) of the corresponding housing (110, 120).

12. An assembly (1), **characterized in that** it includes an electrical equipment support (100) according to any preceding claim together with at least one spacer (10) having each end (12, 13) thereof engaged in one of said housings (110, 120) of the frame (101) in such a manner that a rear face (15) of the spacer (10) rests on one of said abutment faces (113D, 123D) of each housing (110, 120).

13. An assembly (1) according to the preceding claim, including a support (100) according to claim 3, wherein one of the two ends (13) of the spacer (10) includes at least one side flange (16) that imparts thereto a width that is equal, ignoring clearance, to the large width (ℓ1) of said engagement opening (123), said lateral flange (16) presenting a front face (16A) situated facing the other one of said abutment faces (108) of the corresponding housing (110, 120).

14. An assembly (1) according to claim 12 or claim 13, and including a support (100) according to claim 9, wherein said drop edge (105A, 106A) presents an outside face (106B) facing away from said rectangular opening (105, 106), forming an "attachment" face of each housing (110, 120), and in which one of the ends (12) of said spacer (10) includes a rib (14) projecting from its rear face (15) and attached to the attachment face (106B).

15. Electrical equipment including an assembly (1) according to any one of claims 12 to 14, together with at least two equipment mechanisms fitted in each subdivided rectangular opening (105, 106) of the support (100).

## Patentansprüche

1. Halterung (100) für mehrere elektrische Gerätschaften mit einem Rahmen (101), der auf der Innenseite mindestens eine rechteckige Öffnung (105,106) abgrenzt und eine Vorderseite (107), eine gegenüberliegende Rückseite (108) und auf zwei gegenüberliegenden Seiten jeder rechteckigen Öffnung (105, 106) zwei Aufnahmen (110, 120) umfasst, die zueinander geöffnet und dazu vorgesehen sind, Endstücke (12, 13) eines quer in die rechteckige Öffnung (105, 106) eingesetzten Distanzstückes (10) aufzunehmen, wobei sich jede Aufnahme (110, 120) unter der Rückseite (108) des Rahmens (101) erstreckt und zwei Anschlagseiten (108, 113D, 123D) umfasst, darunter eine vordere Rückhalteseite für das Distanzstück (10), gebildet durch die Rückseite (108) des Rahmens (101) sowie eine hintere Rückhalteseite (113D, 123D) für das Distanzstück (10), die im wesentlichen parallel zur vorderen Rückhalteseite ausgerichtet ist.

2. Halterung (100) für elektrische Gerätschaften nach vorausgehendem Anspruch, bei der mindestens eine der Aufnahmen (120) jeder rechteckigen Öffnung (105, 106) über eine Einsetzöffnung (123) in die Vorderseite (107) des Rahmens (101) einmündet.

3. Halterung (100) für elektrische Gerätschaften nach vorausgehendem Anspruch, bei der die Einsetzöffnung (123) eine lange Breite (11) und eine kurze Breite (12) aufweist.

4. Halterung (100) für elektrische Gerätschaften nach vorausgehendem Anspruch, bei der die Einsetzöffnung (123) eine T-Form oder eine Schlüssellochform aufweist.

5. Halterung (100) für elektrische Gerätschaften nach einem der Ansprüche 2 bis 4, bei der die andere der Aufnahmen (110) über eine Einstecköffnung (113) von konstanter Breite (l3) in die Vorderseite (107) des Rahmens (101) einmündet.

6. Halterung (100) für elektrische Gerätschaften nach vorausgehendem Anspruch, bei der auf der Vorderseite (107) des Rahmens (101) die Einstecköffnung (113) durch drei Ränder (113A, 113B, 113C) abgegrenzt ist, von denen zwei Seitenränder (113B, 113C) parallel und ein Querrand (113A) im Abstand zur entsprechenden Seite der rechteckigen Öffnung (105, 106) angeordnet sind, die einen axialen Anschlag für das Distanzstück (10) bildet.

7. Halterung (100) für elektrische Gerätschaften nach einem der vorausgehenden Ansprüche, bei der der Rahmen (101) durch eine durchbohrte Platte auf den zwei gegenüberliegenden Seiten jeder rechteckigen Öffnung (105, 106) von zwei durchquerenden Fenstern (113, 123) gebildet ist, welche Einsetz- und Einstecköffnungen für die Endstücke (12, 13) des Distanzstückes (10) in die Aufnahmen (110,120) bilden.

8. Halterung (100) für elektrische Gerätschaften nach dem vorausgehenden Anspruch, bei der eine der Anschlagseiten jeder Aufnahme (110, 120) durch die Rückseite (108) des Rahmens (101) gebildet wird.

9. Halterung (100) für elektrische Gerätschaften nach einem der beiden vorausgehenden Ansprüche, bei der die gegenüberliegenden Seiten jeder rechteckigen Öffnung (105, 106) von einer abfallenden Kante (105A, 106A) umrandet sind, die auf der Rückseite des Rahmens (101) hervorsteht.

10. Halterung (100) für elektrische Gerätschaften nach vorausgehendem Anspruch, bei der sich die Einsetz- und Einstecköffnungen (113, 123) auch in die abfallende Kante (105A, 106A) erstrecken.

11. Halterung (100) für elektrische Gerätschaften nach vorausgehendem Anspruch, bei der die Einsetz- und Einstecköffnungen (113, 123) an der abfallenden Kante (105A, 106A) durch drei Ränder (113B, 113C, 113D, 123B, 123C, 123D) abgegrenzt sind, von denen zwei parallele Seitenränder (113B, 113C, 123B, 123C) seitliche Anschläge für die zwei Endstücke (12, 13) des Distanzstückes (10) bilden und ein Querrand (113D, 123D), der sich im Abstand zur Rückseite (108) des Rahmens (101) befindet, der eine der Anschlagseiten (108, 113D, 123D) der entsprechenden Aufnahme (110, 120) bildet.

12. Einheit (1), **dadurch gekennzeichnet, dass** sie eine Halterung (100) für elektrische Gerätschaften nach einem der vorausgehenden Ansprüche und mindestens ein Distanzstück (10) umfasst, dessen beide Endstücke (12, 13) derart in eine der Aufnahmen (110, 120) des Rahmens (101) eingesetzt sind, dass eine Rückseite (15) des Distanzstückes (10) auf einer der Anschlagseiten (113D, 123D) jeder Aufnahme (110, 120) aufliegt.

13. Einheit (1) nach dem vorausgehenden Anspruch mit einer Halterung (100) nach Anspruch 3, bei der eines der beiden Endstücke (13) des Distanzstückes (10) mindestens einen Seitenflügel (16) umfasst, der ihm bis auf das Spiel genau eine Breite verleiht, die der langen Breite (11) der Einsetzöffnung (123) entspricht, wobei der Seitenflügel (16) eine Vorderseite (16A) aufweist, die der anderen der Anschlagseiten (108) der entsprechenden Aufnahme (110, 120) gegenüberliegt.

14. Einheit (1) nach einem der Ansprüche 12 und 13 mit einer Halterung (100) nach Anspruch 9, bei der die abfallende Kante (105A, 106A) eine zur rechteckigen Öffnung (105, 106) entgegengesetzt gerichtete Außenseite (106B) aufweist, die eine als Einhängeseite bezeichnete Seite jeder Aufnahme (110, 120) bildet, und in der eines der Endstücke (12) des Distanzstückes (10) an seiner Rückseite (15) überstehend eine Rippe (14) umfasst, die an der Einhängeseite (106B) angehängt ist.

15. Elektrische Gerätschaft mit einer Einheit (1) nach einem der Ansprüche 12 bis 14 und mit mindestens zwei Gerätemechanismen, die in jede unterteilte rechteckige Öffnung (105, 106) der Halterung (100) eingesetzt sind.
